# EUROPEAN PATENT APPLICATION

(11) **EP 3 121 456 A1**
(43) Date of publication of application: **25.01.2017**
(21) Application number: 15765570.5
(22) Date of filing: 26.02.2015
(51) Int. Cl.: F16B 5/07, A47B 47/04, A63F 9/12, A63H 33/08, B65D 6/24, E04B 2/74

(54) **ASSEMBLABLE STRUCTURE**

(30) Priority: 18.03.2014 JP 2014055063
(71) Applicant: Paddy Field Co., Ltd., Nara-shi Nara 6308226 (JP)
(72) Inventor: TAKUBO Masahiro, Nara-shi, Nara 6310014 (JP)
(74) Representative: Müller Hoffmann & Partner
(86) International application number: PCT/JP2015/055720
(87) International publication number: WO 2015/141439

(57) **Abstract**

[Problem] To improve the appearance and reduce production costs of an assemblable structure, and further, facilitate assembly thereof, while permitting firm assembly without using an adhesive. [Solution] A hard plate (1) configured from acrylic or the like is equipped with a first part that has a protrusion (2), and a second part that is provided with a recess (4) having an inner width smaller than the horizontal width of the protrusion (2). The maximum width (2w) of the protrusion is larger than the width (4w) of the recess. Slits (3) penetrating in the thickness direction are provided in the vicinity of the side surfaces of the protrusion (2), and the slits (3) allow the vicinity of the side surfaces of the protrusion (2) to be deflected. Alternatively, similar slits (40) are provided in the vicinity of the inside wall surface of the recess (4) so as to allow for pressing against the side surfaces of the protrusion (2).

## Description

### Technical Field

The present invention relates to an assemblable structure assembled by fitting parts consisting of a hard material such as acrylic resin.

### Background Art

As a hard plate, there exists an acrylic plate consisting of acrylic resin, for example. Such an acrylic plate is considerably high in transparency and low in costs. Thus, it is often used for assembling merchandise display cases, for example.

An adhesive is difficult to be attached on a hard plate such as an acrylic plate. Thus, when an assemblable structure such as a merchandise display case is assembled using such hard plates, acrylic plates are usually fitted one another. As such an assemblable structure, the assembly case described in the following Patent Literature 1 is proposed, for example.

In the assembly case, the engaging projections C of the engaging panels A of acrylic plates are fitted into the fitting holes E of the fitting panels B of acrylic plates, and slid so that vertical parts of the L-shaped engaging projections C of the engaging panels A are brought into contact with the edges of the fitting holes E of the fitting panels B. Then, the engaging panels A and the fitting panels B are fixed with the stoppers S to prevent the separation therebetween.

### Citation List

### Patent Literature

Patent Literature 1: Japanese Patent Application Laid-open No. 2004-168330

### Summary of Invention

### Technical Problem

However, in this assembly case, the engaging projections C and the stoppers S project from the fitting panels B, which causes a problem that the appearance of the case is deteriorated. Moreover, this assembly case requires the preparation of the stoppers S, increasing the number of parts. This causes problems that the production costs become high and the assembly requires troubles. Meanwhile, even when the parts consisting of such a hard plate are provided with unevenness to be fitted each other, the plates are not elastic, which causes a problem that they are difficult to be engaged.

In view of the above problems, the present invention aims at providing an assemblable structure that improves the appearance and reduces production costs, and further, facilitates assembly thereof, while permitting firm assembly without using an adhesive.

### Solution to Problem

That is, in order to solve the above problems, the present invention is an assemblable structure comprising a first part that has a protrusion, and a second part that has a recess having an inner width smaller than a width of the protrusion, the first part and the second part being fitted each other by inserting the protrusion of the first part into the recess of the second part, in which in the vicinity of the inner side of right and left side surfaces of the protrusion or an inner side surface of the recess, slits extending in a direction along the side surface and penetrating the front and back sides are provided.

In this configuration, even when the first part and the second part are consisting of a hard material, the protrusion, the recess, and the like can be elastically deformed at the slits in the vicinity of the side surface, allowing each part to be fitted tightly.

In such an invention, the slit is provided not to reach an edge of the protrusion or the recess.

In this configuration, no cutout exists on the edge of the protrusion or the recess, preventing a crack occurred at a thin part between the slit and the side surface.

Moreover, the slit is curved or bent.

In this configuration, stress can be dispersed to the curved or bent portion, preventing a crack occurred due to concentration of stress on one position.

Furthermore, the slit is provided on both sides of the side surface of the protrusion or the recess.

In this configuration, both of the right and left sides can be securely fitted by elastic deformation.

Moreover, when the slit is configured, an end close to an edge in the projection direction of the protrusion is connected to another slit extending in the width direction of the protrusion.

In this configuration, the protrusion can be deflected easily in the width direction by another slit extending in the width direction, increasing elasticity.

When the other slit is provided, it is curved or bent at the center part in the width direction of the protrusion so as to be separate from the edge in the projection direction of the protrusion.

In this configuration, the front end of the protrusion can be deflected in the width direction, allowing even the front end to press the recess from the inside. Advantageous Effects of Invention

The present invention is an assemblable structure comprising a first part that has a protrusion, and a second part that has a recess having an inner width smaller than a width of the protrusion, the first part and the second part being fitted each other by inserting the protrusion of the first part into the recess of the second part, in which in the vicinity of the inner side of right and left side surfaces of the protrusion or an inner side surface of the recess, slits extending in a direction along the side surface and penetrating the front and back sides are provided. Thus, even when the first part and the second part are consisting of a hard material, the protrusion, the recess, and the like can be elastically deformed at the slits in the vicinity of the side surface, allowing each part to be fitted tightly.

### Brief Description of Drawings

FIG. 1 is a perspective view illustrating an assemblable structure in a state where a plurality of hard plates are separate.
FIG. 2 is a front view illustrating a protrusion and a recess of a first embodiment.
FIG. 3 is a front view illustrating protrusions of other embodiments.
FIG. 4 is a front view illustrating protrusions of other embodiments.
FIG. 5 is a diagram illustrating recesses provided with slits.
FIG. 6 is a diagram illustrating states in which hard plates 1 are fitted.

### Description of Embodiments

The following will describe an assemblable structure of the invention with reference to the drawings.

### [First embodiment]

First, the first embodiment of the assemblable structure will be described.

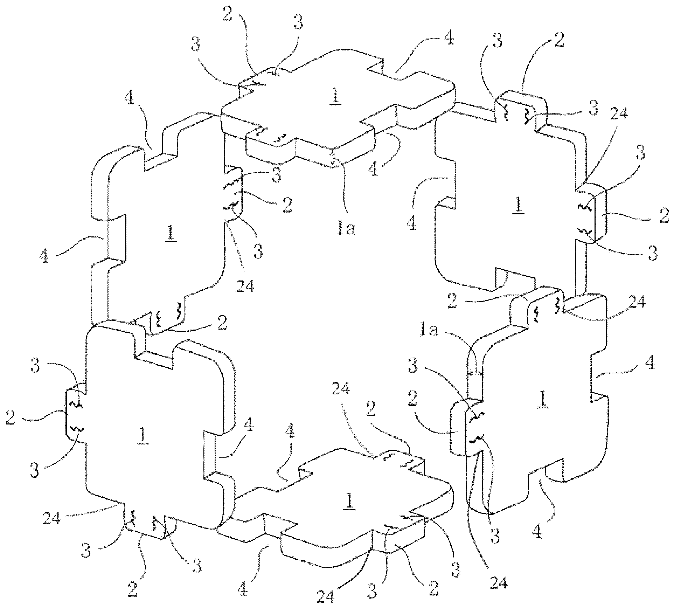

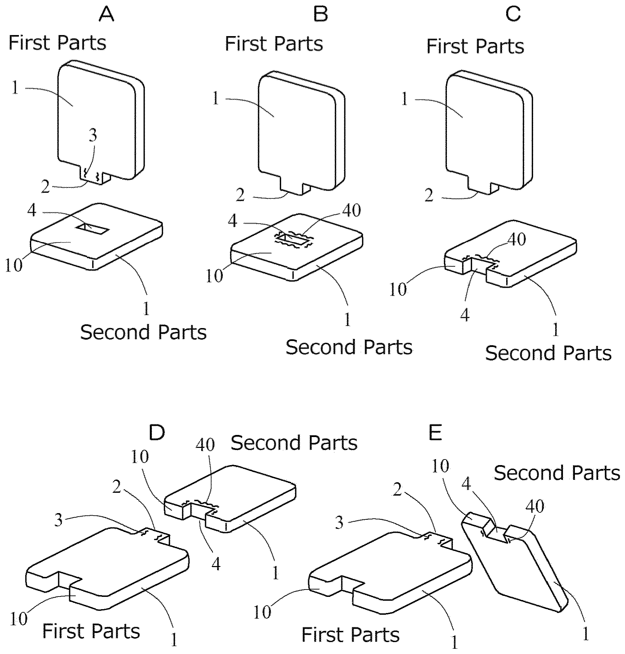

As illustrated in FIG. 1 and FIG. 6, the assemblable structure is formed by assembling a same kind or different kind of hard plates 1. As the hard plate 1, there can be used a hard material such as an acrylic plate, a polycarbonate plate, an ABS plate, a PET plate, a metal, a carbon, or a wood, for example. Here, a transparent acrylic plate is used as an example for the description.

The hard plate 1 includes a protrusion 2 and a recess 4, and an assemblable structure is formed by fitting the protrusion 2 into the recess 4.

### [Protrusion]

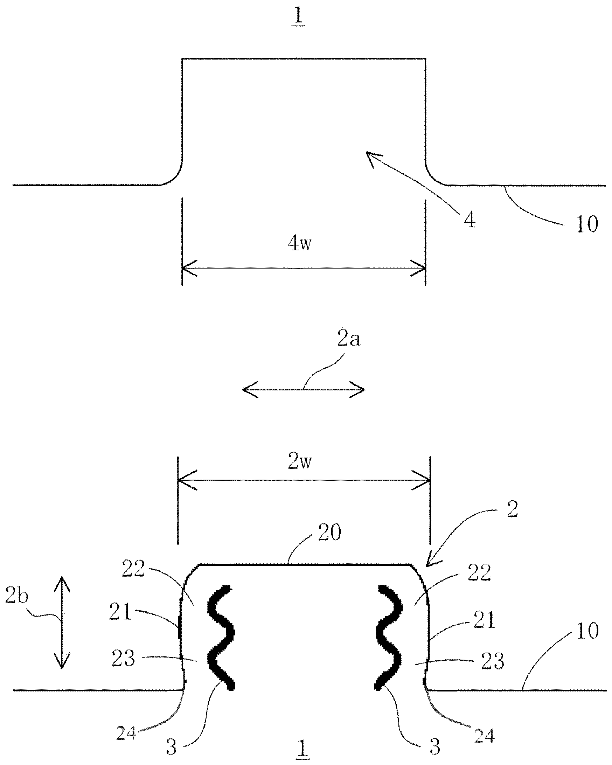

As illustrated in the lower diagram of FIG. 2, the protrusion 2 is provided so as to project from an edge 10 of the hard plate 1, and in the vicinity of the side surfaces, slits 3 penetrating the hard plate 1 in a thickness direction 1a (see FIG. 1) are provided.

First, the side surface form of the protrusion 2 will be described.

A side surface corner of the front end side of the protrusion 2 is round-shaped. The dimension of both of right and left widths of a part at the front end starting to curve is made smaller than the inner dimension of the recess 4, which allows the front end portion to be inserted into the recess 4 easily. Meanwhile, the middle part of the protrusion 2 is expanded outward, and a dimension 2w of both of right and left widths (maximum dimension) is made slightly larger than a width 4w of the recess 4. Here, when the width 4w of the recess 4 is A, the width 2w of the protrusion 2 is made larger in a range of 1% to 3% of A. Moreover, a base end 24 of the protrusion 2 close to the edge 10 of the hard plate 1 has a width nearly same to an inner width of an opening end portion of the recess 4. This is because although the protrusion 2 is provided with the slits 3, the base end 24 is difficult to be elastically deformed, disabling the base end 24 to be inserted in the recess 4 completely. Thus, the side surface form of the protrusion 2 is expanded outward from the front end side to the side of the base end 24.

Next, the slit 3 provided in the vicinity of the side surface of the protrusion 2 will be described using FIG. 2, for example.

The slit 3 is provided to penetrate in the thickness direction by laser processing. When a position at which the slit 3 is provided is excessively close to an edge 21 (side surface) in a width direction 2a of the protrusion 2, the space between the slit 3 and the side surface (referred to as a "deflective part") becomes excessively thin, causing a crack easily. On the other hand, when the position is excessively far from the side surface, it becomes difficult to elastically deform such a part. Therefore, the slit 3 is preferably provided at a position of about 0.5 mm to 3.0 mm from the side surface. Moreover, when an inner dimension in a lateral direction of the slit 3 (space width) is excessively large, the deflective part is deformed considerably if great pressure is applied in the lateral direction, causing a crack easily. Thus, it is preferable to uniformly set a space width of the slit 3 in a range of about 0.3 mm to 0.7 mm (preferably 0.4 to 0.6 mm). The slit 3 is provided as a pair in the vicinity of both of the right and left side surfaces of the protrusion 2.

The following form can be considered as a form of the slit 3.

First, as illustrated in FIG. 2, the first slit 3 is configured to be curved in a waveform at two positions 22, 23 of a projection direction 2b of the protrusion 2 so as to be closer to the edge 21 in the width direction 2a of the protrusion 2. In the embodiment, a distance between the slit 3 and the edge 21 of the protrusion 2 at two positions 22, 23 is set to be about 1 mm.

As described above, the protrusion 2 has a pair of slits 3 on both sides thereof, which allows both sides of the protrusion 2 to be deflected by a space width of the slit 3. Thus, although the width 2w of the protrusion 2 is slightly larger than the width 4w of the recess 4, the protrusion 2 can be fitted into the recess 4 by deflecting both sides of the protrusion 2 at the slits 3. Furthermore, after the protrusion 2 is fitted in the recess 4, the protrusion 2 is expanded due to the elasticity of the protrusion 2, and the width 2w of the protrusion 2 becomes larger than the width 4w of the recess 4. Thus, the protrusion 2 is tightly in contact with the recess 4, making it difficult that the protrusion 2 falls from the recess 4 off.

Moreover, as described above, the first slit 3 is curved in a waveform at two positions 22, 23 in the projection direction 2b of the protrusion 2 so as to be closer to the edge 21 in the width direction 2a of the protrusion 2. Thus, a distance between the slit 3 and the edge 21 of the protrusion 2 becomes small at a plurality of positions 22, 23, and both sides of the protrusion 2 are deflected easily at those positions. Thus, the positions at which the protrusion 2 is deflected are not concentrated on one position, allowing the protrusion 2 to be deflected easily and not to be cracked easily. In this manner, when the slit 3 is curved or bent at two or more positions so as to be closer to the edge 21 in the width direction 2a of the protrusion 2, the protrusion 2 is deflected easily and not cracked easily.

Furthermore, the slit 3 is provided not to reach an edge 20 in the projection direction 2b of the protrusion 2. In other words, the slit 3 is separate from the edge 20 of the protrusion 2 and is not connected to the edge 20 of the protrusion. Thus, the slits 3 do not cause a crack on both sides of the protrusion 2.

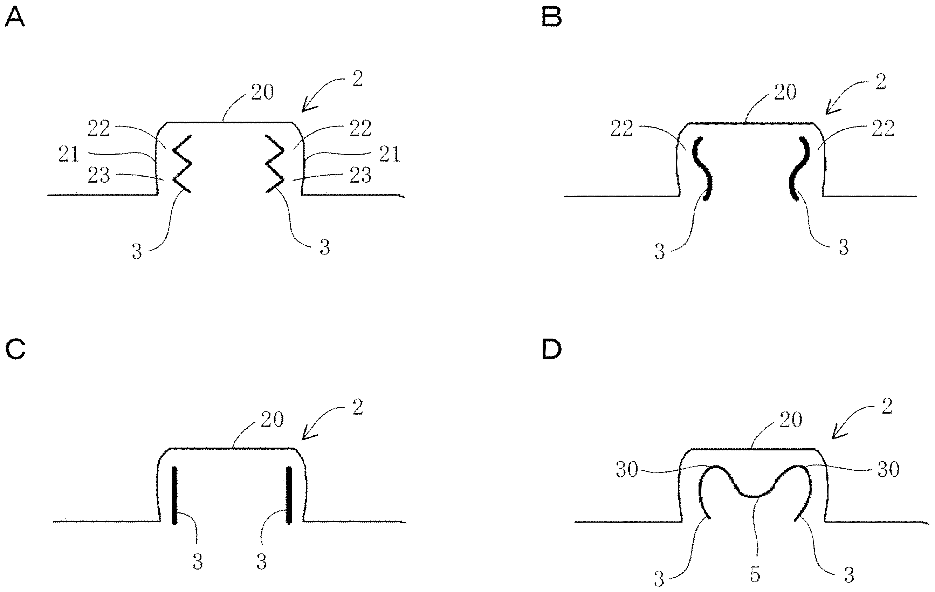

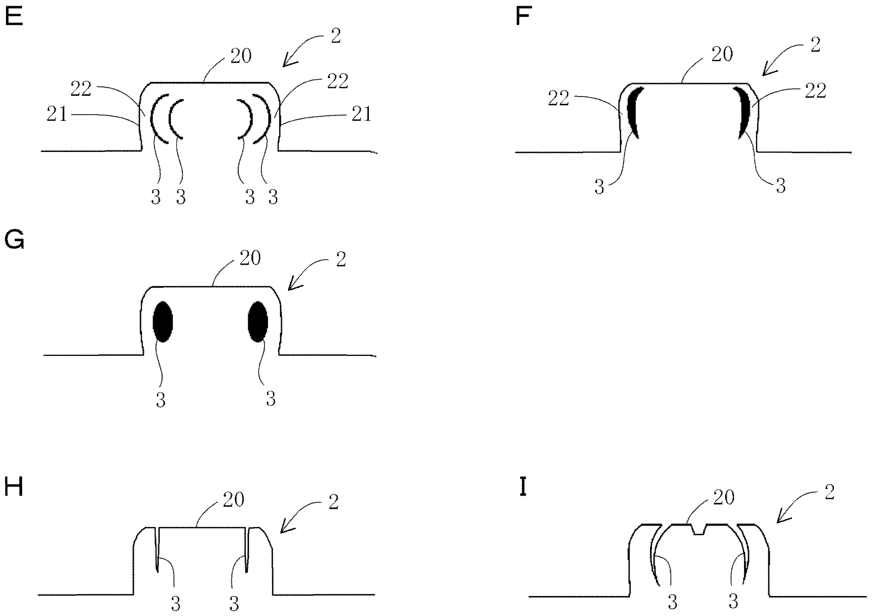

Moreover, the slit 3 in the forms illustrated in FIG. 3 and FIG. 4 may be also provided.

First, in the embodiment of FIG. 3A, the slit 3 is bent at two positions 22, 23 in the projection direction of the protrusion 2 so as to be closer to the edge 21 in the width direction of the protrusion 2. Furthermore, the slit 3 is configured not to reach the edge 20 in the projection direction of the protrusion 2.

In the embodiment of FIG. 3B, the slit 3 is curved at one position 22 in the projection direction of the protrusion 2 so as to be closer to the edge 21 in the width direction of the protrusion 2. Furthermore, the slit 3 is configured not to reach the edge 20 in the projection direction of the protrusion 2.

In the embodiment of FIG. 3C, the slit 3 is not curved but extended linearly in the projection direction 2b of the protrusion 2. Furthermore, the slit 3 is configured not to reach the edge 20 in the projection direction of the protrusion 2.

In the embodiment of FIG. 3D, in a pair of slits 3 provided on both sides in the width direction of the protrusion 2, edges 30 close to the edge 20 in the projection direction of the protrusion 2 are connected by another slit 5 extending in the width direction of the protrusion 2. The other slit 5 is curved at a center part in the width direction of the protrusion 2 so as to be separate from the edge 20 of the protrusion. When the other slit 5 is curved, the protrusion 2 is deflected in the width direction more easily and becomes high in elasticity. In this manner, the protrusion 2 is fitted in the recess 4 more easily, making it difficult that the protrusion 2 falls from the recess 4 off.

In the embodiment of FIG. 4E, the protrusion 2 is provided with two slits 3 on each of both sides in the width direction of the protrusion 2. Each slit 3 is curved in an arc form so as to be closer to the edge 21 in the width direction of the protrusion 2 at one position 22 in the projection direction of the protrusion 2.

In the embodiment of FIG. 4F, a pair of slits 3 provided on both sides in the width direction of the protrusion 2 have a large slit width in a crescent shape. In the embodiment of FIG. 4G, a pair of slits 3 have a large slit width in an elliptic form. Thus, the interior of the slit 3 is a relatively-large cavity. Therefore, the protrusion 2 is deflected in the width direction more easily and becomes high in elasticity. Thus, the protrusion 2 is fitted in the recess 4 more easily, making it difficult that the protrusion 2 falls from the recess 4 off.

In the embodiment of FIG. 4H, a pair of slits 3 provided on both sides in the width direction of the protrusion 2 reach the edge 20 in the projection direction of the protrusion 2, and have a linear form. In the embodiment of FIG. 4I, a pair of slits 3 reach the edge 20 in the projection direction of the protrusion 2, and have an arc form.

Furthermore, in another embodiment not illustrated, the protrusion 2 may be provided with one slit 3 on one side of the width direction 2a thereof. Also in this case, the protrusion 2 can be deflected by a width of one slit 3.

### [Recess]

Meanwhile, corresponding to the protrusion 2 described above, the recess 4 is configured to be recessed from the edge 10 of the hard plate 1. Note that although the recess 4 is configured to be recessed from the edge 10 of the hard plate 1, it may be recessed in the thickness direction from the edge 10 of a surface portion of the hard plate 1. Then, the above-described protrusion 2 is fitted into this recess 4.

The recess 4 is formed to configure a linear inside wall surface so that the protrusion 2 can be firmly fixed to the inside wall surface by pressing a middle part of the protrusion 2 from the inside.

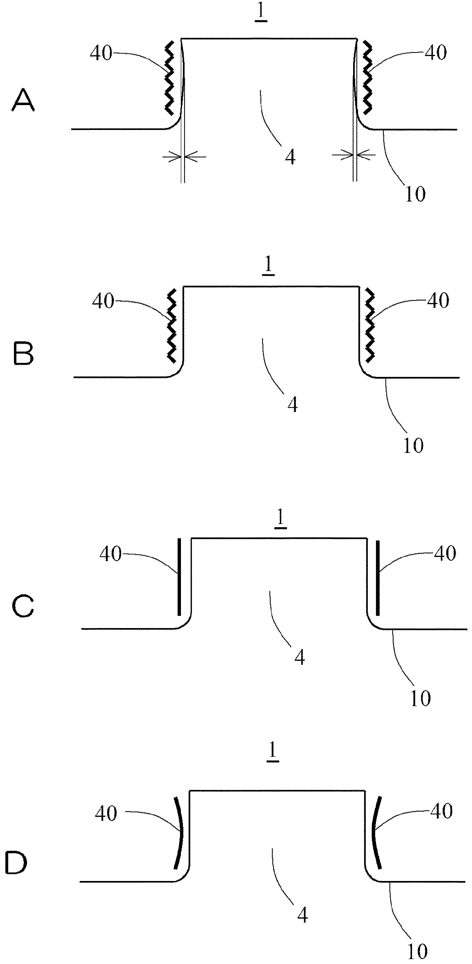

As another form of the recess 4, the inside wall surface may be curved to be expanded inward, and the same slit may be provided in the vicinity of the side surface, as illustrated in FIG. 5A. Also in this case, a slit 40 is provided in a position about 0.5 mm to 3.0 mm from the side surface, and a space width in the lateral direction is set to be in a range of about 0.3 mm to 0.7 mm (preferably 0.4 to 0.6 mm) in the same manner. Moreover, the form of the slit 40 may be configured so as to form a waveform (FIG. 5B), a liner form (FIG. 5C) or a curved form (FIG. 5D) that does not reach the edge, so that a deflective part between the slit 40 and the side surface is deformed to press the side surface of the protrusion 2.

### [Assemblable structure]

When an assemblable structure is made by combining the hard plates 1 configured as above, a plurality of same kind or different kind of hard plates 1 are prepared, and each protrusion 2 and each recess 4 are fitted each other. When the hard plates 1 having the protrusion 2 and the recess 4 are fitted each other, each hard plate 1 is fitted in a perpendicular direction (FIGS. 6A to 6C) or introduced in a coplanar (FIG. 6D) or inclined state (FIG. 6E). Moreover, when the recess 4 is provided on a plane of the hard plate 1 (FIGS. 6A, 6B), the protrusion 2 is inserted from a normal direction of the plane.

When the protrusion 2 is inserted into the recess 4 in this manner, the deflective part is deflected inward due to the presence of the slits 3, whereby the protrusion 2 can be tightly fitted by strongly pressing the recess 4 from the inside wall surface.

The embodiment described above is an assemblable structure including the hard plate 1 (first part) that has the protrusion 2, and the hard plate 1 (second part) that has the recess 4 having an inner width smaller than a width of the protrusion 2, the hard plates 1 being fitted each other by inserting the protrusion 2 into the recess 4, in which in the vicinity of the inner side of right and left side surfaces of the protrusion 2 or the inner side surface of the recess 4, the slits 3, 40 extending in a direction along the side surface and penetrating the front and back sides are provided. Thus, even when the hard plate 1 is consisting of a hard material, the protrusion 2, the recess 4, and the like are elastically deformed at the slits 3, 40 in the vicinity of the side surface, allowing each hard plate 1 to be fitted tightly.

Moreover, the slits 3, 40 are provided not to reach the edge 10 of the protrusion 2 or the recess 4, which prevents a crack occurred at a thin part between the slits 3, 40 and the side surface.

Moreover, when the slits 3, 40 are curved or bent, a deflected part can be dispersed to a curved or bent portion. Thus, a part on which stress is applied can be dispersed, preventing a crack and the like.

Furthermore, the slits 3, 40 are provided on both sides of the side surface of the protrusion 2 or the recess 4, whereby both of the right and left sides are elastically deformed securely for fitting.

Moreover, when the slit 3 is configured so that the end close to the edge 20 in the projection direction of the protrusion 2 is connected to another slit 5 extending in the width direction of the protrusion 2, the protrusion 2 can be deflected easily in the width direction by the other slit 5 extending in the width direction, thus increasing elasticity.

In the case in which the other slit 5 is provided, when the other slit 5 is made so that it is curved or bent in the center part in the width direction of the protrusion 2 so as to be separate from the edge 20 in the projection direction of the protrusion 2, the front end of the protrusion 2 can be deflected in the width direction, allowing even the front end to press the recess 4 from the inside.

Note that the present invention is not limited to the embodiment described above, and can be performed by various forms.

For example, in the embodiment described above, the protrusion 2 and the recess 4 are provided in the same hard plate 1. However, the protrusion 2 and the recess 4 may be provided in the hard plates 1 different from each other. In this case, in relation with the present invention, the hard plate 1 having the protrusion 2 is a first part, and the hard plate 1 having the recess 4 is a second part. When the protrusion 2 and the recess 4 are provided in the same hard plate 1, the first part and the second part are the same part.

The embodiment described above has been explained using an example of the case in which each of the hard plates 1 having the protrusion 2 and the recess 4 is consisting of an acrylic plate. However, the hard plate 1 may be consisting of another hard material. In this case, a position or a space width of the slits 3, 40 can be changed appropriately in accordance with the hardness of the hard material.

Furthermore, in the embodiment described above, the slits 3, 40 having a same space width are provided. However, the space width may differ depending on the front end side or the base end side.

### Industrial Applicability

The assemblable structure of the present invention can be used in various kinds of fields such as an assembly block, an intellectual toy including a puzzle, propriety examination equipment, a trial field, a stereoscopic mannequin, a building model, furniture, a wall surface such as a partition formed by piling up cubes of FIG. 1 in a wall surface form, a distribution system in which cases are distributed in units of parts, a joint, a caring article, and the like.

### Reference Numerals

- 1: hard plate
- 1a: thickness direction of the hard plate
- 10: edge of the hard plate
- 2: protrusion
- 2a: width direction of the protrusion
- 2b: projection direction of the protrusion
- 2w: width of the protrusion
- 20: edge in the projection direction of the protrusion
- 21: edge in the width direction of the protrusion
- 3: slit
- 30: another slit
- 4: recess
- 40: another slit
- 4w: width of the recess
- 5: another slit

## Claims

1. An assemblable structure comprising:
a first part that has a protrusion, and
a second part that is provided with a recess having an inner width smaller than a horizontal width of the protrusion,
the first part and the second part being fitted each other by elastically deforming the protrusion of the first part or/and the recess of the second part, wherein
in the vicinity of a side surfaces of the protrusion or a side surface of the recess, slits extending in a direction along the side surface and penetrating the front and back sides are provided.

2. The assemblable structure according to claim 1, wherein the slit is provided not to reach an edge of the protrusion or the recess.

3. The assemblable structure according to claim 1, wherein the slit is curved or bent.

4. The assemblable structure according to claim 1, wherein the slit is provided on both sides of the side surface of the protrusion or the recess.

5. The assemblable structure according to claim 1, wherein the slit connects an end close to an edge in the projection direction of the protrusion to another slit extending in the width direction of the protrusion.

6. The assemblable structure according to claim 1, the another slit is curved or bent at the center part in the width direction of the protrusion so as to be separate from the edge in the projection direction of the protrusion.
